(19) Europäisches Patentamt

European Patent Office

Office européen des brevets

(11) **EP 0 600 291 B1**

(12) **EUROPEAN PATENT SPECIFICATION**

(45) Date of publication and mention
of the grant of the patent:
**18.09.2002   Bulletin 2002/38**

(51) Int Cl.[7]: **H04N 5/44**

(21) Application number: **93118415.4**

(22) Date of filing: **13.11.1993**

(54) **Method and apparatus for adaptive proscan conversion**

Verfahren und Vorrichtung zur adaptiver Umsetzung in ein Zeilenfolgesignal

Méthode et dispositif pour convertir de manière adaptive un signal entrelacé en signal progressif

(84) Designated Contracting States:
**DE ES FR GB IT**

(30) Priority: **23.11.1992  EP 92403150**

(43) Date of publication of application:
**08.06.1994   Bulletin 1994/23**

(73) Proprietor: **THOMSON multimedia**
**92648 Boulogne Cédex (FR)**

(72) Inventor: **Knee, Michael**
**F-67000 Strasbourg (FR)**

(74) Representative:
**Hartnack, Wolfgang, Dipl.-Ing. et al**
**Deutsche Thomson-Brandt GmbH**
**European Patent Operations**
**Karl-Wiechert-Allee 74**
**30625 Hannover (DE)**

(56) References cited:
**EP-A- 0 316 231**          **EP-A- 0 395 275**
**EP-A- 0 561 286**          **WO-A-85/02080**
**US-A- 4 791 487**

• **BBC RESEARCH DISCLOSURE 1985/5 May 1985 pages 1 - 5 ROBERTS 'The Improved Display of 625-Line Television Pictures : Adaptive Interpolation'**
• **NHK LABORATORIES NOTE no. 326 , January 1986 , TOKYO JP pages 2 - 15 TANAKA ET AL. 'HDTV- PAL Standards Converter'**
• **SMPTE JOURNAL vol. 99, no. 10 , October 1990 , SCARSDALE, NY US pages 824 - 828 TICHIT ET AL. 'Progressive Scanning : an EDTV Gateway to HDTV'**
• **INTERNATIONAL BROADCASTING CONVENTION - 21-25 SEPTEMBER 1984 BRIGHTON, UK pages 116 - 119 LONG ET AL. 'Scan Conversion for Higher Definition Television'**
• **PATENT ABSTRACTS OF JAPAN vol. 14, no. 229 (E-928) 15 May 1990 & JP-A-02 058 990 (SONY) 28 February 1990**

## Description

The present invention relates to a method and to an apparatus for adaptive proscan conversion.

Background

There are different algorithms for conversion of video signals from interlace to progressive scanning. But either the picture quality or the noise performance are not good enough with respect to the amount of hardware used. BBC Research Disclosure RD 1985/5, May 1985, p. 1-5, A. Roberts: "The improved display of 625-line television pictures: adaptive interpolation", discloses a motion detector which can be used for adaptive display upconversion interpolation, e.g. 625-line progressive at 100 pictures per second. This motion detector uses the difference between the two input pixels located vertically adjacent to the current pixel to be interpolated and the difference between the two input pixels located temporally adjacent to the current pixel to be interpolated in order to determine a soft-switch motion signal. That signal controls the interpolation of the current pixel from the same four vertically-temporally surrounding input pixel values.
US-A-4 791 487, WO-A-85/02 080, and EP-A-0 395 275 disclose similar embodiments without picture rate doubling. However, the motion detector receives only temporal difference signals. In US-A-4 791 487 a hard-switch is used. In WO-A-85/02 080 additional pixels surrounding vertically-temporally the pixel to be interpolated can be used for the interpolation. In EP-A-0 395 275 the motion detector output signals are filtered spatially in order to smooth the control signal.
EP-A-316 231 discloses a method according to the preamble of claim 1 and an apparatus according to the preamble of claim 6.

Invention

It is one object of the invention to disclose a method for improved proscan conversion. This object is achieved by the method disclosed in claim 1.
It is a further object of the invention to disclose an apparatus which utilises the inventive method . This object is achieved by the apparatus disclosed in claim 6.
The motion adaptive algorithm for conversion of luminance signals from interlace to progressive scanning presented here has been tested on 50Hz signals and delivers a high picture quality and has good noise performance. A simpler algorithm, such as vertical averaging, can be used for the colour difference signals.
The algorithm adaptively interpolates the missing lines in the interlace signal. The original lines are left untouched. Each interpolated pixel is the result of a soft switch between pure interframe interpolation, which is the more suitable for areas without moving detail, and interpolation using the Diag-3W algorithm, which is the more suitable for moving areas. The Diag-3W algorithm is already disclosed in EP-A-0 561 286, but is described below for completeness.
The soft switch coefficient is calculated using a normalised comparison between two estimates of the likely error resulting from each of the two kinds of interpolation. To limit the occurrence of wrong decisions due to noise or to certain structures in the picture, the decision is spread horizontally, vertically and temporally, but only over a very small area so that the decision remains local to the pixel being interpolated. Throughout this application mention is made of a 'reference algorithm' which is described in detail. Possible variations to this algorithm are also mentioned at each stage of the description and it is intended that the present patent application should cover all these variations.
In principle the inventive method consists in adaptive proscan conversion for interlaced lines, wherein for calculating the samples of the missing lines for each sample (X) :

- from spatially and temporally adjacent pixels (A-C, F-H) of adjacent fields a spatial error estimate ($E_v$) is calculated;
- from spatially and temporally adjacent pixels (A, F; B, G; C, H) of adjacent fields a temporal error estimate ($E_t$) is calculated;
- the spatial error estimate ($E_v$) and the temporal error estimate ($E_t$) are combined to form a normalised error estimate ($E_n$);
- the normalised error estimate controls a soft switch (456, 461, 462) which mixes accordingly a spatially interpolated estimate value ($F_v$) and a temporally interpolated estimate value ($F_t$) for said sample (X) to generate the final value for said sample;
- said spatially interpolated estimate value ($F_v$) is calculated from spatially adjacent pixels (D, E) of the current field;
- said temporally interpolated estimate value ($F_t$) is calculated from temporally adjacent pixels (B, G) of adjacent fields.

Advantageous additional embodiments of the inventive method are resulting from the respective dependent claims.

In principle the inventive apparatus for adaptive proscan conversion of interlaced lines (T) calculates sample values of the missing lines for each sample (X) and comprises:

- a vertical error circuit (311-332, 34-38) in which from spatially and temporally adjacent pixels (A-C, F-H) of adjacent fields a spatial error estimate ($E_v$) is calculated;
- a temporal error circuit (221-223, 23-28) in which from spatially and temporally adjacent pixels (A, F; B, G; C, H) of adjacent fields a temporal error estimate ($E_t$) is calculated;
- a soft switch processor (401) in which the spatial error estimate ($E_v$) and the temporal error estimate ($E_t$) are combined to form a normalised error estimate ($E_n$);
- a spatial interpolation circuit (451) in which a spatially interpolated estimate value ($F_v$) is calculated from spatially adjacent pixels (D, E) of the current field;
- a temporal interpolation circuit (452) in which a temporally interpolated estimate value ($F_t$) is calculated from temporally adjacent pixels (B, G) of adjacent fields;
- a soft switch (456, 461, 462), controlled by the normalised error estimate and which mixes accordingly the spatially interpolated estimate value ($F_v$) and the temporally interpolated estimate value ($F_t$) for said sample (X) to generate the final value for said sample;
- a line speedup circuit (463) for generating the proscan output signal ($Y_{out}$) from said interlace lines (T) and said sample values (X).

Advantageous additional embodiments of the inventive apparatus are resulting from the respective dependent claims.

Drawings

Preferred embodiments of the invention are described with reference to the accompanying drawings, which show in:

Fig. 1   delay circuit;
Fig. 2   temporal error circuit;
Fig. 3   vertical error circuit;
Fig. 4   interpolation circuit.

Preferred embodiments

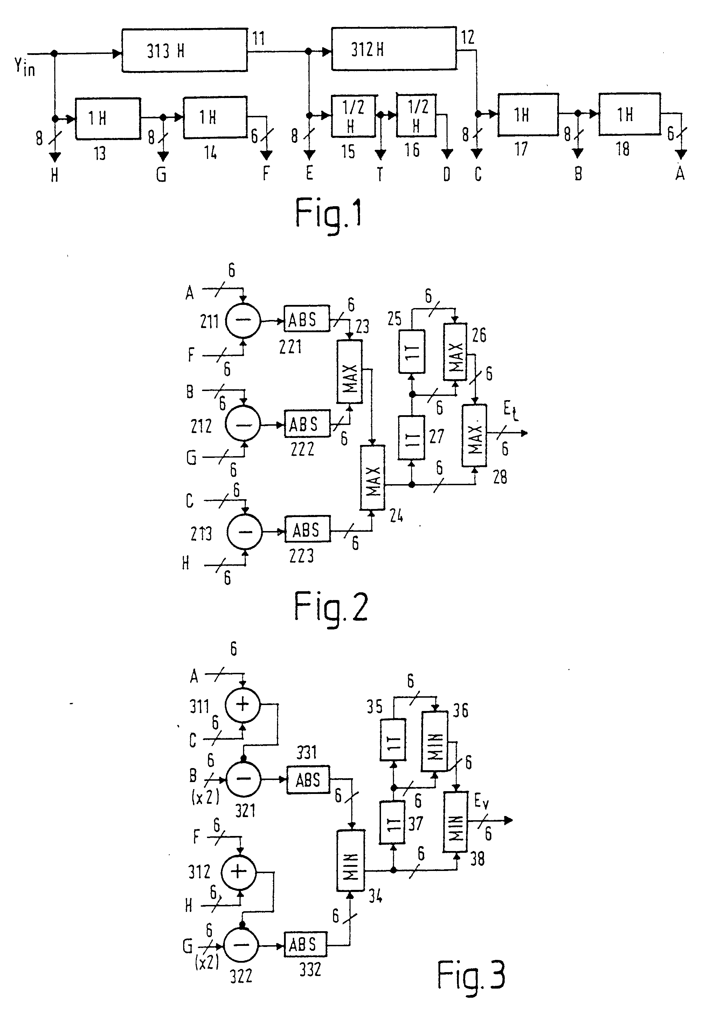

In the following description the lines involved are denoted by letters according to the letters A to H and T in Fig. 1.
In Fig. 1, the incoming luminance signal $Y_{in}$ passes through a 313-line delay 11 and a 312-line delay 12 and through a first 1-line delay 13 and a second 1-line delay 14. The output signal of delay 11 passes through a first 1/2-line delay 15 and a second 1/2-line delay 16. The output signal of delay 12 passes through a third 1-line delay 17 and a fourth 1-line delay 18. At the output of delays 18, 17, 12, 16, 15, 11, 14, 13 and at the input of delay 13 the lines or signals with the respective indices A, B, C, D, T, E, F, G and H are available. The following table marks the corresponding positions within the vertical-temporal plane:

```
    A       F
      ·D          vertical ↑
    B   X   G          → temporal
        E
    C       H
```

Individual pixels are usually denoted using a suffix giving the horizontal position, the current position being 'n'. The position X of the current pixel corresponds to output T of Fig. 1.

**Interpolation filters:**

The two interpolation filters, between which the soft switching mentioned above is made according to the decision criterion described below, are as follows:

In the reference algorithm, the spatial interpolation $F_v$ is the result of the Diag-3W algorithm:

$$S_i = \sum_{j=-1}^{+1} |D_{n+i+j} - E_{n-i+j}|, \qquad i = -1, 0, 1,$$

$$F_i = (D_{n+i} + E_{n-i})/2, \qquad i = -1, 0, 1,$$

k = value of i for which $S_i$ is a minimum.

$$F_v = \begin{cases} F_k & \text{if the value of } F_k \text{ is between } D_n \text{ and } E_n \text{ inclusive} \\ F_0 & \text{otherwise,} \quad F_0 = (D_n + E_n)/2 \end{cases}$$

In a simpler version of the algorithm, generally pure vertical interpolation $F_v = (D_n + E_n)/2$ or any other spatial interpolation algorithm, could be used in place of Diag-3W.
The temporal interpolation is $F_t = (B_n + G_n)/2$ .

**Decision criterion:**

In order to select the relative weights of $F_v$ and $F_t$ in the interpolation, at first estimates of vertical and temporal interpolation errors are made:

$$E_v = \min \{|2B_i - A_i - C_i|, |2G_i - F_i - H_i|\}, \qquad i = n-1, n, n+1$$

$$E_t = K * \max \{|A_i - F_i|, |B_i - G_i|, |C_i - H_i|\}, \quad i = n-1, n, n+1$$

where K is a weighting factor whose value is '1' in the reference algorithm.
Each of the six components of $E_v$ is a measure of the error that would result from simple vertical averaging, which can be regarded as a safe estimate of the error that would result from Diag-3W.
The nine components of $E_t$ are pure frame differences, which give a measure of the error that would result from pure temporal interpolation. Because that error is more likely to be visible, the maximum is taken.
The use of the minimum of six values for $E_v$ and the maximum of nine values for $E_t$ provides limited horizontal and temporal spreading of the decision and biases it towards spatial interpolation in areas that are likely to be moving.
In another version of the algorithm, the second lowest and second highest values are used, rather than the minimum and maximum, in order to improve noise immunity.
The temporal error circuit of Fig. 2 receives at its inputs A-C and F-H the current pixels corresponding to the equation for the temporal error. In a first subtractor 211 the value of pixel A is subtracted from the value of pixel F. In a second subtractor 212 the value of pixel B is subtracted from the value of pixel G. In a third subtractor 213 the value of pixel C is subtracted from the value of pixel H. The output signals of subtractors 211 to 213 pass a first 221, a second 222 and a third 223 absolute value circuit, respectively. In a first maximum value circuit 23 the maximum of the output signals of circuits 221 and 222 are calculated. In a second maximum value circuit 24 the maximum of the output signals of circuits 23 and 223 are calculated. The output signal of circuit 24 passes through a first 27 and a second 25 one-clock delay (clock period related to subsequent pixels). From the input and output signal of delay 25 the maximum is calculated in a third maximum value circuit 26, from the output signal of which and the input signal of delay 27 a further maximum is calculated in a fourth maximum value circuit 28, which outputs the temporal error estimate $E_t$.

The vertical error circuit of Fig. 3 receives at its inputs A-C and F-H the current pixels corresponding to the equation for the vertical error. In a first adder 311 the value of pixel A is combined with the value of pixel C. The output signal is subtracted in a first subtractor 321 from the doubled (e.g. by shifting) value of pixel B. In a second adder 312 the value of pixel F is combined with the value of pixel H. The output signal is subtracted in a second subtractor 322 from the doubled (e.g. by shifting) value of pixel G. The output signals of subtractors 321 and 322 pass a first 331 and a second 332 absolute value circuit, respectively. In a first minimum value circuit 34 the minimum of the output signals of circuits 331 and 332 is calculated. The output signal of circuit 34 passes through a first 37 and a second 35 one-clock delay (clock period related to subsequent pixels). From the input and output signal of delay 35 the minimum is calculated in a second minimum value circuit 36, from the output signal of which and the input signal of delay 37 a further minimum is calculated in a third minimum value circuit 38, which outputs the vertical error estimate $E_v$.

In this particular implementation, the calculation of the vertical and temporal errors $E_v$ and $E_t$ uses only the 6 most significant bits of the sample values, which means that the line memories 14 and 18 producing samples A and F need only store to 6-bit accuracy because these samples are not used in the interpolation itself.

In the reference algorithm, the absolute values are not true absolutes but have an error of '1' on negative numbers because they are calculated by selectively inverting the two's-complement representation of the argument according to the sign bit.

**Filter selection:**

The two error measures $E_v$ and $E_t$ are used to select between the corresponding two interpolation filters $F_v$ and $F_t$ as follows. First, an intermediate decision criterion $E_n$ is calculated:

$$E_n = \frac{E_t - E_v}{\max \{E_t + E_v, 1\}} + P$$

where, in the reference algorithm, P = 1/4. This value was found as reasonable result in case $E_t = E_v$. The term '1' is added to avoid dividing by zero in case max $\{E_t + E_v\}$ = 0. $E_n$ is then limited to the range [0,1):

$$E' = \begin{cases} 0 & E_n < 0 \\ E_n & 0 \leq E_n < 1 \\ 1 - \varepsilon & 1 \leq E_n \end{cases}$$

where $\varepsilon$ represents one least significant bit in the representation of $E_n$.

In the reference algorithm, E' is then passed through a linear horizontal filter to obtain the soft switch control value $S_n$:

$$S_n = \sum_{i=-4}^{4} h_i * E'_{n+i}$$

where $(h_i, i=-4,...,4) = (1,2,2,2,2,2,2,2,1)/16$ in the reference algorithm but could be any horizontal filter with approximately similar coefficients.

The final result is then $X = C_v F_v + C_t F_t$, where the spatial coefficient $C_v = S_n$ and the temporal coefficient $C_t = 1 - C_v$.

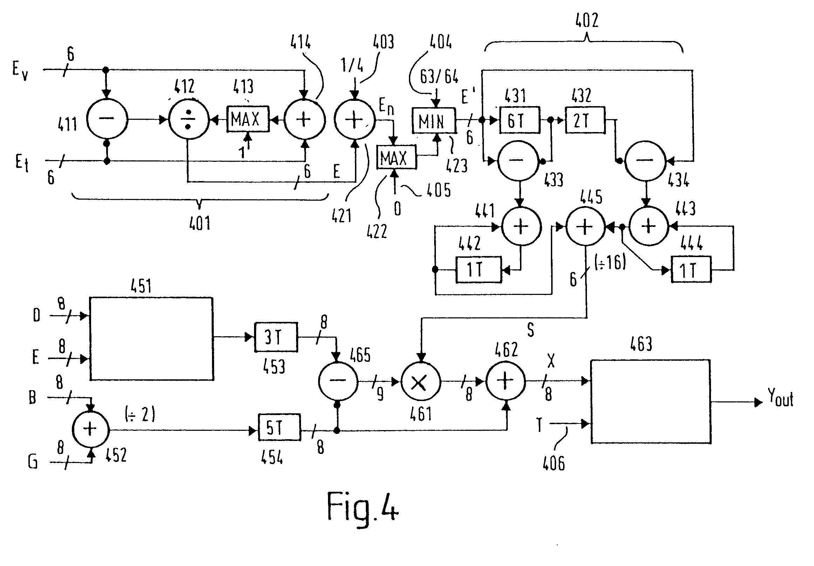

In Fig. 4 the errors $E_v$ and $E_t$ are combined in a soft switch processor 401 to make the normalised error E, which is again expressed to 6-bit accuracy. In processor 401 the errors are combined in an adder 414 and $E_v$ is subtracted in a subtractor 411 from $E_t$. The output signal of adder 414 and the value '1' are fed to a maximum value circuit 413 the output signal of which is used in a divider 412 for dividing the output signal of subtractor 411. Subsequently, in an adder 421 the value P = 1/4 at input 403 is added, resulting in output signal $E_n$. The output signal of adder 421 passes through a maximum value circuit 422 receiving value '0' at its second input 405 and through a minimum value circuit 423 receiving value '63/64' at its second input 404.

After this limiting to the range [0,1), the result E' is filtered in a horizontal filter 402, in this case using a technique in which the filter is implemented as the average of a 9-tap average and a 7-tap average. The output signal of circuit 423 passes through a six-clock delay 431 and a two-clock delay 432 and is fed to a subtractor 433 in which the output of delay 431 is subtracted from E' and is fed to a subtractor 434 in which the output of delay 432 is subtracted from E'. The output of subtractor 433 is connected to an adder 441 in which its one-clock delayed (delay 442) output signal is added, too. The output of subtractor 434 is connected to an adder 443 in which its output signal is added one-clock delayed (delay 444), too. The output signals of delay 442 and adder 443 are combined in an adder 445 which also divides by '16' (e.g. shift operation). The filtering result S, expressed to 6-bit accuracy in the reference algorithm, is the soft switch control signal for mixing the relative proportions of the spatial interpolation 451 (e.g. Diag-3W) and the temporal interpolation. Samples D and E are input to a circuit 451 for spatial interpolation, the output signal of which is delayed appropriately in a three-clock-delay 453. Samples B and G are averaged in an averager 452, the output signal of which is delayed appropriately in a five-clock-delay 454. The output of delay 454 is subtracted in a subtracter 465 from the output of delay 453 and fed to an adder 462. The output signal of subtractor 465 becomes multiplied in a multiplier 461 by value S, the output of which is combined in adder 462 to the output of delay 454, resulting in the interpolated output sample value X.

Finally, the interpolated signal X is combined with the suitably delayed input signal T (Fig. 1) in a line speedup memory 463 using standard techniques to make a signal having twice the line scanning rate of the input.

Due to the use of a combination of vertical and temporal error measures to form a balanced decision between the two corresponding modes of interpolation, no motion detector is required which would take only the temporal error into account.

Advantageously, the horizontal low pass filtering of the soft switch control signal E' minimises the occurrence of wrong decisions while retaining good flicker reduction properties on horizontal edges.

The invention may be used in TV receivers or VCR's or any other display units. The numbers given can easily be adopted to different TV standards or input signal characteristics.

The invention has the following advantages:

- near-perfect progressive interpolation of static areas;
- gradual rolloff to spatial interpolation in moving areas;
- paucity of visible defects;
- hardware tractability.

**Claims**

1. Method for adaptive proscan conversion of an interlaced video signal, wherein only pixel values for missing lines are interpolated and wherein the value for a current pixel X to be interpolated in a current field m is calculated using a combined spatial and temporal error estimate which controls the mixing of a spatially interpolated estimate value ($F_v$) and a temporally interpolated estimate value ($F_t$) for the value of said pixel X, wherein said spatially interpolated estimate value ($F_v$) is calculated (451) from pixels D and E of the current field, said pixels D and E having a location vertically adjacent to that of pixel X and

   wherein said temporally interpolated estimate value ($F_t$) is calculated (452) from pixels B and G of the fields m-1 and m+1 adjacent to said current field m, said pixels B and G having a location temporally adjacent to that of pixel X, **characterised by** the following steps:

   - calculating a spatial error estimate $E_v$ from pixels A, B, C, F, G, H, and from pixels horizontally adjacent to those pixels, wherein pixels A and C are vertically adjacent to pixel B and pixels F and H are vertically adjacent to pixel G and wherein:

$$E_v = \min \{|2B_i - A_i - C_i|, |2G_i - F_i - H_i|\}$$

   or

$$E_v = \text{second lowest of } \{|2B_i - A_i - C_i|, |2G_i - F_i - H_i|\},$$

   wherein i = n-1, n, n+1, and n is the horizontal position of pixel X;
   - calculating a temporal error estimate $E_t$ from pixels A, B, C, F, G, H, and from pixels horizontally adjacent to those pixels and wherein:

$$E_t = K*max\{|A_i\text{-}F_i|, |B_i\text{-}G_i|, |C_i\text{-}H_i|\},$$

or

$$E_t = K*(\text{second highest of})\{|A_i\text{-}F_i|, |B_i\text{-}G_i|, |C_i\text{-}H_i|\},$$

wherein i = n-1, n, n+1,      K = weighting factor, in particular K = 1;
- combining (403, 411-414) $E_v$ and $E_t$ in order to form a normalised error estimate $E_n$;
- controlling with $E_n$ a soft switch (465, 461, 462) which performs said mixing.

2. Method according to claim 1, wherein said spatially interpolated estimate value ($F_v$) is calculated from pixel differences corresponding to a detected picture structure direction.

3. Method according to claim 1 or 2, wherein $E_n$ is calculated according to the formula:

$$E_n = \frac{E_t - E_v}{\max\{E_t + E_v, 1\}} + P$$

where P is a pre-selected value and $E_n$ is then limited to:

$$E' = \begin{cases} 0 & E_n < 0 \\ E_n & 0 \le E_n < 1 \\ 1-\varepsilon & 1 \le E_n \end{cases}$$

in order to form a limited normalised error estimate E', where $\varepsilon$ represents one least significant bit in the representation of $E_n$.

4. Method according to claim 3, wherein E' is filtered horizontally (402) for controlling (S) said soft switch (465, 461, 462).

5. Method according to any of claims 1 to 4, wherein $E_v$, $E_t$, $E_n$ and/or E' are calculated with a word length less than the word length of the value of said pixel X, the word length in particular being limited to the six most significant bits.

6. Apparatus for adaptive proscan conversion of an interlaced video signal, wherein only pixel values for missing lines are interpolated and wherein the value for a current pixel X to be interpolated in a current field m is calculated using a combined spatial and temporal error estimate which controls the mixing of a spatially interpolated estimate value ($F_v$) and a temporally interpolated estimate value ($F_t$) for the value of said pixel X, comprising:

a spatial interpolation circuit (451) for calculating said spatially interpolated estimate value ($F_v$) from pixels D and E of the current field, said pixels D and E having a location vertically adjacent to that of pixel X;
a temporal interpolation circuit (452) for calculating said temporally interpolated estimate value ($F_t$) from pixels B and G of the fields m-1 and m+1 adjacent to said current field m, said pixels B and G having a location temporally adjacent to that of pixel X,

**characterised by**:

- a vertical error circuit (311-332, 34-38) calculating a spatial error estimate $E_v$ from pixels A, B, C, F, G, H, and from pixels horizontally adjacent to those pixels, wherein pixels A and C are vertically adjacent to pixel B and pixels F and H are vertically adjacent to pixel G and wherein:

$$E_v = \min\{|2B_i\text{-}A_i\text{-}C_i|, |2G_i\text{-}F_i\text{-}H_i|\}$$

or

$E_v$ = second lowest of $\{|2B_i-A_i-C_i|, |2G_i-F_i-H_i|\}$, wherein i = n-1, n, n+1, and n is the horizontal position of pixel X;

- a temporal error circuit (221-223, 23-28) calculating a temporal error estimate $E_t$ from pixels A, B, C, F, G, H, and from pixels horizontally adjacent to those pixels and wherein:

$$E_t = K*max \{|A_i-F_i|, |B_i-G_i|, |C_i-H_i|\},$$

or

$$E_t = K*(second \ highest \ of) \{|A_i-F_i|, |B_i-G_i|, |C_i-H_i|\},$$

wherein i = n-1, n, n+1,     K = weighting factor, in particular K = 1;
- a soft switch processor (401) combining (403, 411-414) $E_v$ and $E_t$ in order to form a normalised error estimate $E_n$;
- a soft switch (465, 461, 462) controlled by $E_n$ which performs said mixing;
- a line speedup circuit (463) for generating the proscan output signal ($Y_{out}$) from the non-missing lines and from said interpolated pixel values X.

7. Apparatus according to claim 6, wherein $E_n$ is calculated according to the formula:

$$E_n = \frac{E_t - E_v}{max \{E_t + E_v, 1\}} + P$$

where P is a pre-selected value and $E_n$ is then limited to:

$$E' = \begin{cases} 0 & E_n < 0 \\ E_n & 0 \leq E_n < 1 \\ 1-\varepsilon & 1 \leq E_n \end{cases}$$

in order to form a limited normalised error estimate E', where $\varepsilon$ represents one least significant bit in the representation of $E_n$.

8. Apparatus according to claim 6 or 7, wherein E' is filtered in a horizontal filter (402), the output signal (S) of which controls said soft switch (465, 461, 462).

9. Apparatus according to any of claims 6 to 8, wherein $E_v$, $E_t$, $E_n$ and/or E' are calculated in the related circuits with a word length less than the word length of the value of said pixel X, the word length in particular limited to the six most significant bits.

**Patentansprüche**

1. Verfahren zur adaptiven Proscan-Umwandlung eines Zeilensprung-Videosignals, bei dem nur Pixelwerte für fehlende Zeilen interpoliert werden, und bei dem der Wert für ein gegenwärtiges Pixel X, das in einem gegenwärtigen Halbbild m interpoliert werden soll, unter Verwendung einer kombinierten räumlichen und zeitlichen Fehler-Abschätzung berechnet wird, die das Mischen eines räumlich interpolierten Abschätzungs-Wertes ($F_v$) und eines zeitlich interpolierten Abschätzungs-Wertes ($F_t$) für den Wert des Pixels X steuert, wobei der räumlich interpolierte

Abschätzungs-Wert ($F_v$) aus Pixeln D und E des gegenwärtigen Halbbildes berechnet (451) wird und die Pixel D und E einen Ort haben, der vertikal dem des Pixels X benachbart ist, und wobei der zeitlich interpolierte Abschätzungs-Wert ($F_t$) aus Pixeln B und G der Halbbilder m-1 und m+1 berechnet wird, die dem gegenwärtigen Halbbild m benachbart sind, wobei die Pixel B und G einen Ort haben, der zeitlich dem des Pixels X benachbart ist, **gekennzeichnet durch** die folgenden Schritte:

- Berechnen einer räumlichen Fehler-Abschätzung $E_v$ aus den Pixeln A, B, C, F, G, H und aus Pixeln, die diesen Pixeln horizontal benachbart sind, wobei die Pixel A und C vertikal dem Pixel B benachbart sind und die Pixel F und H vertikal dem Pixel G benachbart sind, und wobei:

$$E_v = \min \{|2B_i - A_i - C_i|, |2G_i - F_i - H_i|\}$$

Oder

$$E_v = \text{zweitniedrigstes von } \{|2B_i - A_i - C_i|, |2G_i - F_i - H_i|\},$$

worin i = n-1, n, n+1, und n die horizontale Position des Pixels X ist;

- Berechnen einer zeitlichen Fehler-Abschätzung $E_t$ aus den Pixeln A, B, C, F, G, H und aus Pixeln, die diesen Pixeln horizontal benachbart sind, und wobei:

$$E_t = K^*\max \{|A_i - F_i|, |Bi - Gi|, |C_i - H_i|\},$$

oder

$$E_t = K^*(\text{zweithöchstes von}) \{|A_i - F_i|, |Bi - Gi|, |C_i - H_i|\},$$

worin i = n-1, n, n+1,    K = Wichtungsfaktor, insbesondere K = 1;

- Kombinieren (403, 411-414) $E_v$ und $E_t$, um eine normierte Fehler-Abschätzung $E_n$ zu bilden;
- Steuern mit $E_n$ einen Überblendschalters (465, 461, 462), der das Mischen ausführt.

2. Verfahren nach Anspruch 1, bei dem der räumlich interpolierte Abschätzungs-Wert ($F_v$) aus Pixel-Unterschieden berechnet wird, die einer festgestellten Bild-Struktur-Richtung entsprechen.

3. Verfahren nach Anspruch 1 oder 2, bei dem $E_n$ gemäß der Formel berechnet wird:

$$E_n = [(E_t - E_v)/\max \{E_t + E_v, 1\}] + P,$$

worin P ein vorgewählter Wert ist und $E_n$ dann begrenzt wird auf:

$$E' = \begin{cases} 0 & E_n < 0 \\ E_n & 0 \leq E_n < 1 \\ 1-\varepsilon & 1 \leq E_n \end{cases}$$

um eine begrenzte normierte Fehler-Abschätzung E' zu bilden, worin $\varepsilon$ ein am wenigsten bedeutsames Bit in der Darstellung von $E_n$ darstellt.

4. Verfahren nach Anspruch 3, bei dem E' horizontal gefiltert (402) wird, um den Überblendschalter (456, 461, 462) zu steuern (S).

5. Verfahren nach einem der Ansprüche 1 bis 4, bei dem $E_v$, $E_t$, $E_n$ und/oder E' mit einer Wortlänge berechnet werden, die kleiner als die Wortlänge des Wertes des Pixels X ist, wobei die Wortlänge insbesondere auf die sechs bedeutsamsten Bits beschränkt ist.

6. Vorrichtung zur adaptiven Proscan-Umwandlung eines Zeilensprung-Videosignals, wobei nur Pixelwerte für fehlende Zeilen interpoliert werden und wobei der Wert für ein gegenwärtiges Pixel X, das in einem gegenwärtigen Halbbild m interpoliert werden soll, unter Verwendung einer kombinierten räumlichen und zeitlichen Fehler-Abschätzung berechnet wird, die das Mischen eines räumlich interpolierten Abschätzungs-Wertes ($F_v$) und eines zeitlich interpolierten Abschätzungs-Wertes ($F_t$) für den Wert des Pixels X steuert, umfassend:

eine räumliche Interpolationsschaltung (451) zum Berechnen des räumlich interpolierten Abschätzungs-Wertes ($F_v$) aus den Pixeln D und E des gegenwärtigen Halbbildes, wobei die Pixel D und E einen Ort haben, der vertikal benachbart zu dem des Pixels X liegt;
eine zeitliche Interpolationsschaltung (452) zum Berechnen des zeitlich interpolierten Abschätzungs-Wertes ($F_t$) aus den Pixeln B und G der Halbbilder m-1 und m+1, die dem gegenwärtigen Halbbild m benachbart sind, wobei die Pixel B und G einen Ort haben, der zeitlich dem des Pixels X benachbart ist,

**gekennzeichnet durch**:

- eine Vertikal-Fehlerschaltung (311-332, 34-38), die eine räumliche Fehlerabschätzung $E_v$ aus den Pixeln A, B, C, F, G, H und aus diesen Pixeln horizontal benachbarten Pixeln berechnet, wobei die Pixel A und C vertikal zum Pixel B benachbart sind und die Pixel F und H vertikal zum Pixel G benachbart sind, und wobei:

$$E_v = \min \{|2B_i\text{-}A_i\text{-}C_i|, |2G_i\text{-}F_i\text{-}H_i|\}$$

oder

$$E_v = \text{zweitniedrigstes von } \{|2B_i\text{-}A_i\text{-}C_i|, |2G_i\text{-}F_i\text{-}H_i|\},$$

worin i = n-1, n, n+1 und n die horizontale Position des Pixels X ist;
- eine zeitliche Fehlerschaltung (221-223, 23, 28) die eine zeitliche Fehlerabschätzung $E_t$ aus den Pixeln A,B, C,F,G,H und aus Pixeln berechnet, die diesen Pixeln horizontal benachbart sind, und wobei:

$$E_t = K^*\max \{|A_i\text{-}F_i|, |B_i\text{-}G_i|, |C_i\text{-}H_i|\}$$

oder

$$E_t = K^*(\text{zweithöchstes von}) \{|A_i\text{-}F_i|, |B_i\text{-}G_i|, |C_i\text{-}H_i|\},$$

worin i = n-1, n, n+1       K = Wichtungsfaktor, insbesondere K = 1;

- einen Überblendschalter-Prozessor (401), der $E_v$ und $E_t$ kombiniert (403, 411-414), um eine normierte Fehlerabschätzung $E_n$ zu bilden;
- einen Überblendschalter (465, 461, 462), der **durch** $E_n$ gesteuert wird, der das Mischen ausführt;
- eine Zeilen-Beschleunigungs-Schaltung (463) zur Erzeugung des Proscan-Ausgangssignals ($Y_{out}$) aus den nicht fehlenden Zeilen und aus den interpolierten Pixelwerten X.

7. Vorrichtung nach Anspruch 6, bei der $E_n$ nach der folgenden Formel berechnet wird:

$$E_n = [(E_t \text{ - } E_v)/\max \{E_t + E_v, 1\}] + P,$$

worin P ein vorgewählter Wert und $E_n$ dann begrenzt ist auf:

$$E' = \begin{cases} 0 & E_n < 0 \\ E_n & 0 \leq E_n < 1 \\ 1-\varepsilon & 1 \leq E_n \end{cases}$$

um eine begrenzte normierte Fehler-Abschätzung E' zu bilden, worin $\varepsilon$ ein am wenigsten bedeutsames Bit in der Darstellung von $E_n$ darstellt.

**8.** Vorrichtung nach Anspruch 6 oder 7, bei der E' in einem Horizontal-Filter (402) gefiltert wird, dessen Ausgangssignal (S) den Überblendschalter (465, 461, 462) steuert.

**9.** Vorrichtung nach einem der Ansprüche 6 bis 8, bei der $E_v$, $E_t$, $E_n$ und/oder E' in den bezogenen Schaltungen mit einer Wortlänge berechnet werden, die kleiner ist als die Wortlänge des Wertes des Pixels X, wobei die Wortlänge insbesondere auf die sechs bedeutsamsten Bits begrenzt ist.

**Revendications**

**1.** Méthode pour convertir de manière adaptive un signal vidéo entrelacé en signal vidéo progressif, dans laquelle seules les valeurs de pixel des lignes manquantes sont interpolées, et dans laquelle la valeur d'un pixel courant X à interpoler dans un champ courant m est calculée à l'aide d'une combinaison d'une estimation d'erreur spatiale et d'une estimation d'erreur temporelle qui contrôle le mélange d'une valeur estimée interpolée spatialement ($F_v$) et d'une valeur estimée interpolée temporellement ($F_t$) pour la valeur dudit pixel X, dans laquelle ladite valeur estimée interpolée spatialement ($F_v$) est calculée (451) à partir des pixels D et E du champ courant, lesdits pixels D et E étant verticalement adjacents au pixel X et dans laquelle ladite valeur estimée interpolée temporellement ($F_t$) est calculée (452) à partir des pixels B et G des champs m-1 et m+1 adjacents audit champ courant m, lesdits pixels B et G étant adjacents temporellement au pixel X, **caractérisée par** les étapes suivantes :

- Calcul d'une estimation d'erreur spatiale $E_v$ à partir des pixels A, B, C, F, G, H et à partir des pixels adjacents horizontalement à ces pixels, où les pixels A et C sont verticalement adjacents au pixel B et les pixels F et H sont verticalement adjacents au pixel G et où :

$$E_v = \min \{|2B_i-A_i-C_i|, |2G_i-F_i-H_i|\}$$

ou

$$E_v = \text{deuxième valeur la plus faible de } \{|2B_i-A_i-C_i|, |2G_i-F_i-H_i|\},$$

où
i = n-1, n, n+1 et n représente la position horizontale du pixel.

- Calcul d'une estimation d'erreur temporelle $E_t$ à partir des pixels A, B, C, F, G, H et à partir des pixels horizontalement adjacents à ces pixels et où :

$$E_t = K*\max\{|A_i-F_i|, |B_i-G_i|, |C_i-H_i|\},$$

ou

$$E_t = K*(\text{deuxième valeur la plus élevée de}) \{|A_i-F_i|, |B_i-G_i|, |C_i-H_i|\},$$

où i = n-1, n, n+1,  K = facteur de pondération, en particulier K = 1.

- Combinaison (403, 411-414) de $E_v$ et $E_t$ pour constituer une estimation d'erreur normalisée $E_n$.

- Contrôle à l'aide d'$E_n$ d'un commutateur logiciel (465, 461, 462) qui effectue ledit mélange.

2. Méthode selon la revendication 1, dans laquelle ladite valeur estimée interpolée spatialement ($E_v$) est calculée à partir d'écarts de pixel correspondant à une direction de structure d'image détectée.

3. Méthode selon la revendication 1 ou 2, dans laquelle $E_n$ est calculée conformément à la formule suivante :

$$E_n = \boxed{\frac{E_t - E_v}{\max\{E_t + E_v,\ 1\},}} + P$$

où P est une valeur présélectionnée et En est alors limitée à :

$$E' = \begin{cases} 0 & E_n < 0 \\ E_n & 0 \le E_n < 1 \\ 1-\varepsilon & 1 \le E_n \end{cases}$$

pour constituer une estimation d'erreur normalisée limitée E', où $\varepsilon$ représente un binaire de poids faible dans la représentation de $E_n$.

4. Méthode selon la revendication 3, dans laquelle E' est filtrée horizontalement (402) pour le contrôle (S) dudit commutateur logiciel (456, 461, 462).

5. Méthode selon l'une des revendications 1 à 4, dans laquelle $E_v$, $E_t$, $E_n$ et/ou E' sont calculées avec une longueur de mot inférieure à la longueur de mot de la valeur dudit pixel X, la longueur de mot en particulier étant limitée aux 6 binaires de poids le plus fort.

6. Dispositif pour convertir de manière adaptative un signal vidéo entrelacé en signal vidéo progressif, dans lequel seules les valeurs de pixel des lignes manquantes sont interpolées et dans lequel la valeur d'un pixel courant X à interpoler dans un champ courant m est calculée à l'aide d'une combinaison d'une estimation d'erreur spatiale et d'une estimation d'erreur temporelle qui contrôle le mélange d'une valeur estimée interpolée spatialement ($F_v$) et d'une valeur estimée interpolée temporellement ($F_t$) pour la valeur dudit pixel X, comportant :

un circuit d'interpolation spatiale (451) pour le calcul de ladite valeur estimée interpolée spatialement ($F_v$) à partir des pixels D et E du champ courant, lesdits pixels D et E étant verticalement adjacents au pixel X ;
un circuit d'interpolation temporelle (452) pour le calcul de ladite valeur estimée interpolée temporellement ($F_t$) à partir des pixels B et G des champs m-1 et m+1 adjacents audit champ courant m, lesdits pixels B et G étant temporellement adjacents au pixel X,

  **caractérisé par :**

- un circuit d'erreurs verticales (311-332, 34-38) calculant une estimation d'erreur spatiale $E_v$ à partir des pixels A, B, C, F, G, H et à partir des pixels horizontalement adjacents à ces pixels, où les pixels A et C sont verticalement adjacents au pixel B et les pixels F et H sont verticalement adjacent au pixel G et dans lequel :

$$E_v = \min\{|2B_i - A_i - C_i|,\ |2G_i - F_i - H_i|\}$$

ou

$$E_v = \text{deuxième valeur la plus faible de } \{|2B_i\text{-}A_i\text{-}C_i|, |2G_i\text{-}F_i\text{-}H_i|\},$$

où

$i = n\text{-}1, n, n+1$ et $n$ représente la position horizontale du pixel X ;

- un circuit d'erreurs temporelles (221-223, 23-28) calculant une estimation d'erreur temporelle $E_t$ à partir des pixels A, B, C, F, G, H et à partir de pixels horizontalement adjacents à ces pixels et où :

$$E_t = K^*\max \{|A_i\text{-}F_i|, |B_i\text{-}G_i|, |C_i\text{-}H_i|\},$$

ou

$$E_t = K^*(\text{deuxième valeur la plus élevée de}) \{|A_i\text{-}F_i|, |B_i\text{-}G_i|, |C_i\text{-}H_i|\},$$

où $i = n\text{-}1, n, n+1$, $K$ = facteur de pondération, en particulier $K = 1$ ;
- un processeur de commutateur logiciel (401) combinant (403, 411-414) $E_v$ et $E_t$ pour constituer une estimation d'erreur normalisée $E_n$ ;
- un commutateur logiciel (456, 461, 462) contrôlé par $E_n$ qui effectue ledit mélange ;
- un circuit d'accélération de lignes (463) pour la génération du signal de sortie de lignes de balayage progressif ($Y_{out}$) à partir des lignes non manquantes et à partir desdites valeurs de pixel interpolées X.

7. Dispositif selon la revendication 6, dans lequel $E_n$ est calculée conformément à la formule suivante :

$$E_n = \frac{E_t - E_v}{\max \{E_t + E_v, 1\},} + P$$

où P est une valeur présélectionnée et En est limitée à :

$$E' = \begin{cases} 0 & E_n < 0 \\ E_n & 0 \le E_n < 1 \\ 1\text{-}\varepsilon & 1 \le E_n \end{cases}$$

pour constituer une estimation d'erreur normalisée limitée E', où $\varepsilon$ représente un binaire de poids faible dans la représentation de $E_n$.

8. Dispositif selon la revendication 6 ou 7, dans lequel E' est filtrée dans un filtre horizontal (402) dont le signal de sortie (S) contrôle ledit commutateur logiciel (456, 461, 462).

9. Dispositif selon l'une des revendications 6 à 8, dans lequel $E_v$, $E_t$, $E_n$ et/ou E' sont calculées dans les circuits associés avec une longueur de mot inférieure à la longueur de mot de la valeur dudit pixel X, la longueur de mot en particulier limitée aux 6 binaires de poids le plus fort.

Fig.1

Fig.2

Fig.3

Fig.4